# EUROPEAN PATENT APPLICATION

(11) **EP 4 447 004 A1**
(43) Date of publication of application: **16.10.2024**
(21) Application number: 24167353.2
(22) Date of filing: 28.03.2024
(51) Int. Cl.: G06V 20/52, G06V 20/56

(54) **CAMERA MONITORING SYSTEM INCLUDING JACKKNIFE WARNING FEATURES**

(30) Priority: 11.04.2023 US 202318133093
(71) Applicant: Stoneridge Electronics AB, 16903 Solna (SE)
(72) Inventor: KONKA, Vamsi Krishna, Novi, 48374 (US); MURTHY, Banuprakash, Novi, 48374 (US); COOPRIDER, Troy Otis, White Lake, 48386 (US)
(74) Representative: Marks & Clerk LLP

(57) **Abstract**

A camera monitoring system (CMS) for a vehicle includes a camera mounted to a tractor and configured to record images that depict a trailer attached to the tractor, an electronic display configured to display the images, and a CMS controller. The CMS controller is operatively connected to the camera and electronic display and is configured to determine whether a trailer angle of the trailer exceeds a jackknife warning threshold based on a depiction of the trailer in the images; and based on a particular one of the images indicating a trailer angle above the jackknife warning threshold, provide a jackknife warning. A method for preventing jackknifing between a vehicle and a trailer is also disclosed.

## Description

### TECHNICAL FIELD

This disclosure relates to a camera monitoring system (CMS) for a vehicle, and specifically to CMS that includes jackknife warning features.

### BACKGROUND

Mirror replacement systems, and camera systems for supplementing mirror views, are utilized in commercial vehicles to enhance the ability of a vehicle operator to see a surrounding environment. Camera monitoring systems (CMS) utilize one or more cameras to provide an enhanced field of view to a vehicle operator. In some examples, the camera systems cover a larger field of view than a conventional mirror, or include views that are not fully obtainable via a conventional mirror.

In addition to mirror replacement, the images provided via the cameras in a CMS can be utilized to detect aspects of the environment and aspects of the vehicle in an image-processing-based detection process. Among the aspects of the vehicle that can be detected are trailer properties and trailer positioning relative to the vehicle. During some maneuvers, such as backup or turning, the position of the trailer can impact the maneuver, and corrective action may be desired in order to prevent jackknifing and/or similar positioning problems. Knowledge of the current trailer angle is particularly helpful in operating such systems.

### SUMMARY

A camera monitoring system (CMS) for a vehicle according to an example embodiment of the present disclosure includes a camera mounted to a tractor and configured to record images that depict a trailer attached to the tractor, an electronic display configured to display the images, and a CMS controller. The CMS controller is operatively connected to the camera and electronic display and is configured to determine whether a trailer angle of the trailer exceeds a jackknife warning threshold based on a depiction of the trailer in the images; and based on a particular one of the images indicating a trailer angle above the jackknife warning threshold, provide a jackknife warning.

In a further embodiment of the foregoing embodiment, the CMS controller is configured to determine that a trailer angle of the trailer exceeds the jackknife warning threshold based on a percentage of the particular one of the images that depicts the trailer exceeding a predefined threshold.

In a further embodiment of any of the foregoing embodiments, the CMS controller is configured to determine that a trailer angle of the trailer exceeds the jackknife warning threshold based on a distance between predefined reference position of the trailer and a predefined image location in a particular one of the images crossing a threshold.

In a further embodiment of any of the foregoing embodiments, the predefined reference position of the trailer is a rear vertical edge of the trailer.

In a further embodiment of any of the foregoing embodiments, the predefined reference position is an intermediate location on a side of the trailer between ends of the trailer.

In a further embodiment of any of the foregoing embodiments, the images depict at least one of a Class II view and a Class IV view.

In a further embodiment of any of the foregoing embodiments, the warning includes a proposed corrective steering direction.

In a further embodiment of any of the foregoing embodiments, the warning includes an indication of a severity of a risk of a jackknife condition occurring.

In a further embodiment of any of the foregoing embodiments, the warning is an audible warning.

A camera monitoring system (CMS) for a vehicle according to an example embodiment of the present disclosure includes a camera configured to record images that depict a trailer attached to the vehicle, an electronic display configured to display the images, and a CMS controller. The CMS controller is operatively connected to the camera and electronic display and is configured to, based on occurrence of at least one trigger condition: determine that a trailer angle of the trailer exceeds a jackknife warning threshold and provide a jackknife warning. The at least one trigger condition includes at least one of: a percentage of a particular one of the images that depicts the trailer exceeding a first threshold; and a distance between predefined reference position of the trailer and a predefined image location in the particular one of the images crossing a second threshold.

A method for preventing jackknifing between a vehicle and a trailer according to an example embodiment of the present disclosure includes using a camera mounted to a tractor to record images that depict a trailer attached to the tractor; displaying the images on an electronic display; determining whether a trailer angle of the trailer exceeds a jackknife warning threshold based on a depiction of the trailer in the images; and based on a particular one of the images indicating a trailer angle above the jackknife warning threshold, provide a jackknife warning.

In a further embodiment of the foregoing embodiment, the determining includes determining that the trailer angle exceeds the jackknife warning threshold based on a percentage of the particular one of the images that depicts the trailer exceeding a predefined threshold.

In a further embodiment of any of the foregoing embodiments, the determining includes determining that the trailer angle exceeds the jackknife warning threshold based on a distance between a predefined reference position of the trailer in the particular one of the images and a predefined image location crossing a predefined threshold.

In a further embodiment of any of the foregoing embodiments, the predefined reference position of the trailer is a rear vertical edge of the trailer.

In a further embodiment of any of the foregoing embodiments, the predefined reference position is a marker on the trailer.

In a further embodiment of any of the foregoing embodiments, the images depict at least one of a Class II view and a Class IV view.

In a further embodiment of any of the foregoing embodiments, the warning is provided on the electronic display.

In a further embodiment of any of the foregoing embodiments, providing the jackknife warning includes indicating a proposed corrective steering direction to a driver of the vehicle.

In a further embodiment of any of the foregoing embodiments, providing the jackknife warning includes providing an indication of a severity of a risk of the jackknife condition occurring.

In a further embodiment of any of the foregoing embodiments, providing the jackknife warning includes providing an audible warning.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

These and other features of the present invention can be best understood from the following specification and drawings, the following of which is a brief description.

### BRIEF DESCRIPTION OF THE DRAWINGS

The disclosure can be further understood by reference to the following detailed description when considered in connection with the accompanying drawings wherein:
Figure 1A is a schematic front view of a commercial truck with a camera monitoring system (CMS) used to provide at least Class II and Class IV views.
Figure 1B is a schematic to elevational view of a commercial truck with a trailer angle of zero.
Figure 1C is a schematic to elevational view of a commercial truck with a non-zero trailer angle.
Figure 1D is a schematic top elevational view of a commercial truck with a CMS providing Class II, Class IV, Class V and Class VI views.
Figure 2 is a schematic top perspective view of an vehicle cabin including displays and interior cameras.
Figure 3 illustrates an example method for preventing jackknifing using a CMS.
Figures 4A and 4B illustrate Class II and Class IV views generated by a vehicle with a trailer at a trailer angle in the range of 20 to 30 degrees.
Figures 5A and 5B illustrate Class II and Class IV views generated by the vehicle of Figures 4A and 4B at a trailer angle of approximately 45 degrees.
Figures 6A and 6B illustrates Class II and Class IV views generated by the vehicle of Figures 4A and 4B at a trailer angle of approximately 60 degrees.
Figures 7A and 7B illustrate Class II and Class IV views generated by the vehicle of Figures 4A and 4B at a trailer angle of approximately 90 degrees.
Figure 8 illustrates an example indication of a proposed steering correction.

### DETAILED DESCRIPTION

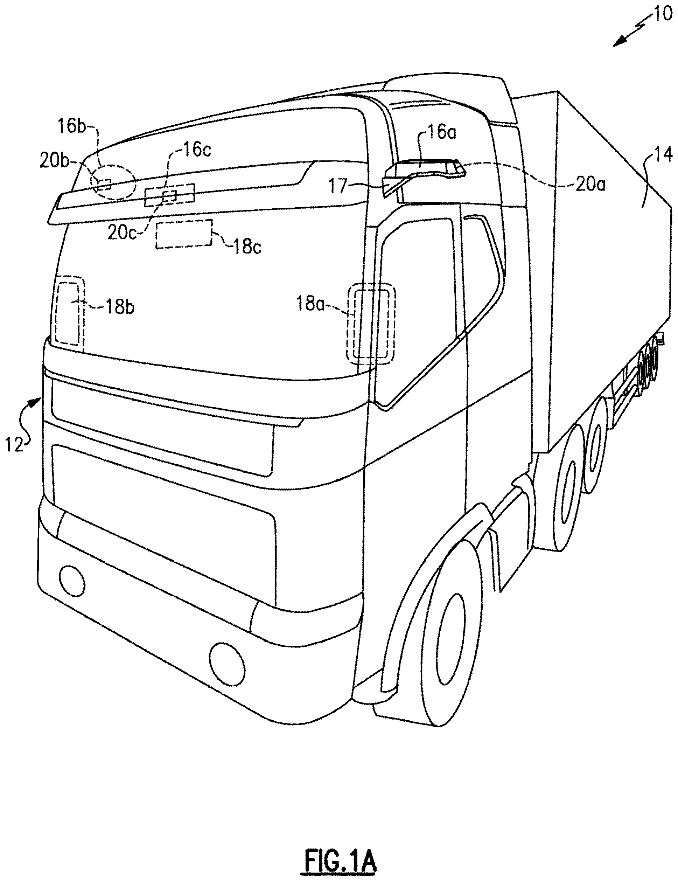

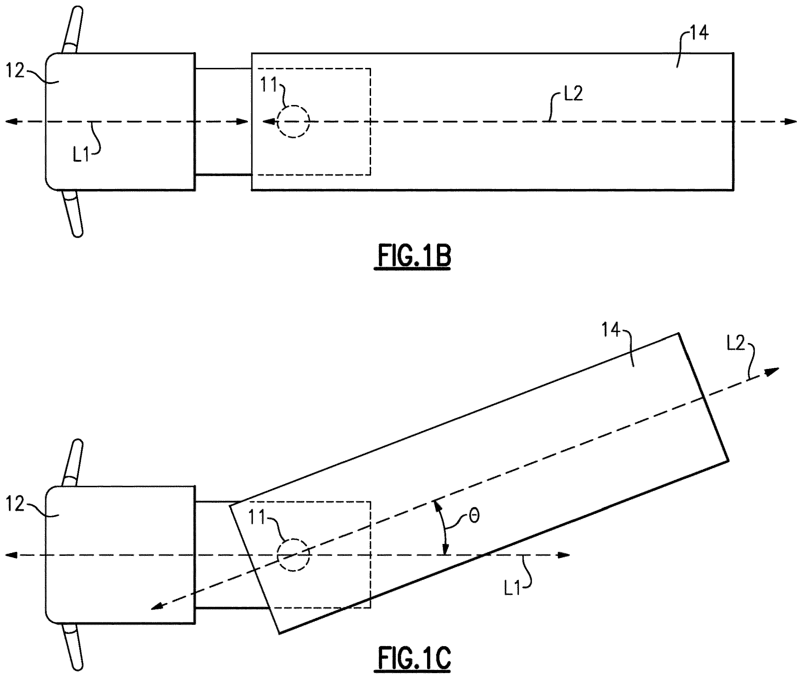

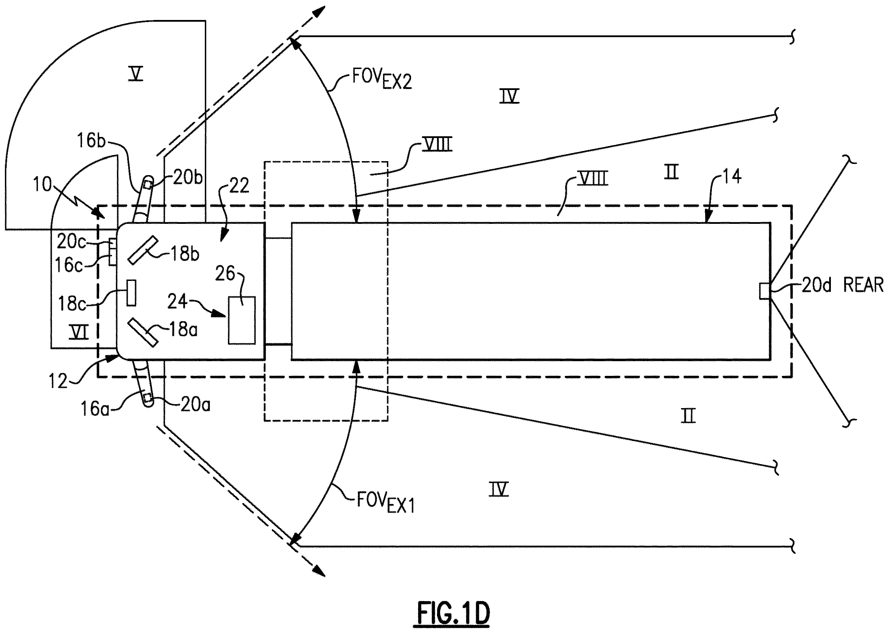

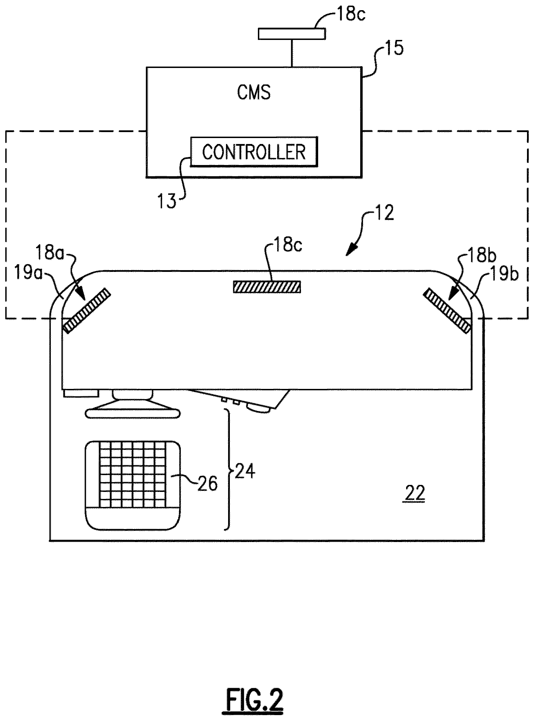

A schematic view of a commercial vehicle 10 is illustrated in Figures 1A, 1B, 1C, and 1D. Figure 2 is a schematic top perspective view of the vehicle 10 cabin including displays and interior cameras. The vehicle 10 includes a vehicle cab or "tractor" 12 for pulling a trailer 14.

As shown in Figure 1B-1C, a hitch 11 mounts the trailer 14 to the tractor, and allows the trailer 14 to pivot with respect to the tractor 12 during turns. The tractor 12 has a central longitudinal axis L1, and the trailer 14 has a central longitudinal axis L2. As shown in Figure 1B, when the tractor 12 is not turning, the axes L1, L2 are parallel or co-axial, and there is no angle between the axis L1, L2. As shown in Figure 1C, when the tractor 12 is turning, an angle θ is formed between the axes L1, L2. The angle between the axes L1, L2, which is approximately 20° in Figure 1C, will be referred to a "trailer angle" herein.

If the trailer angle is sufficiently high, a jackknife condition can occur where the trailer 14 contacts the tractor 12, potentially causing damage and requiring expensive and/or time consuming repairs. As will be discussed below in greater detail, the vehicle 10 includes a camera monitor system (CMS) 15 (see Figure 2) configured to detect when the trailer angle exceeds a jackknife warning threshold (e.g., when the trailer angle is 60° or 70°), and to provide a corresponding warning in response thereto.

Although the vehicle 10 is depicted as a commercial truck in this disclosure, it is understood that other types of vehicles may be used, and it should also be understood that other configurations may be utilized for the vehicle cab 12 and/or trailer 14.

Referring now to Figure 2 with reference to Figures 1A and 1D, the CMS 15 includes driver and passenger side camera arms 16a, 16b mounted to the outside of the vehicle cab 12 (Fig. 1A). If desired, the camera arms 16a, 16b may include conventional mirrors integrated with them as well, although the CMS 15 may be used to entirely replace mirrors. In additional examples, each side can include multiple camera arms, each arm housing one or more cameras and/or mirrors. As shown in Figure 2, the CMS 15 includes a CMS controller 13 that includes processing circuitry that supports operation of the CMS 15 and is operatively connected to memory. The processing circuitry may include one or more microprocessors, microcontrollers, application specific integrated circuits (ASICs), or the like.

Each of the camera arms 16a, 16b includes a respective base 17 (one of which is shown in Fig. 1A) that is secured to, for example, the cab 12. The camera arms 16a, 16b are supported by their respective base 17 and may pivot / articulate relative thereto. At least one rearward facing camera 20a, 20b is secured to each of the camera arms (e.g., arranged within camera arms 16a, 16b). The exterior cameras 20a, 20b provide respective exterior fields of view FOV_{EX1}, FOV_{EX2} that each include at least one of the Class II and Class IV views (Fig. 1B), which are legal prescribed views in the commercial trucking industry. Multiple cameras also may be used for each camera arm 16a, 16b (e.g., in the camera arms 16a, 16b) to provide these views, if desired. Class II and Class IV views are defined in European R46 legislation, for example, and the United States and other countries have similar drive visibility requirements for commercial trucks. Any reference to a "Class" view is not intended to be limiting, but is intended as being an example of the type of view provided to a display by a particular camera. Each arm 16a, 16b may also provide a housing that encloses electronics that are configured to provide various features of the CMS 15.

Referring to Figures 1D and 2, first and second video displays 18a, 18b are arranged on each of the driver and passenger sides within the vehicle cab 12 on or near the A-pillars 19a, 19b. The first and second video displays 18a, 18b each display Class II and Class IV views on a respective side of the vehicle 10, which correspond to rear facing side views along the vehicle 10 that are captured by the exterior cameras 20a, 20b. The first and second video displays 18a, 18b are each electronic displays, such as LCD displays.

If video of Class V and/or Class VI views are also desired, a camera housing 16c and camera 20c may be arranged at or near the front of the vehicle 10 to provide those views (Fig. 1D). A third display 18c arranged within the cabin 22 near the top center of the windshield can be used to display the Class V and Class VI views, which are toward the front of the vehicle 10, to the driver. As shown in Figure 2, the displays 18a, 18b, 18c face a driver region 24 within the cabin 22 where an operator is seated on a driver seat 26. The location, size, and field(s) of view streamed to any particular display 18 may vary from the configurations described in this disclosure and still incorporate the disclosed invention.

If video of Class VIII views is desired, camera housings can be disposed at the sides and/or rear of the vehicle 10 to provide fields of view including some or all of the Class VIII zones of the vehicle 10. As illustrated, the Class VIII view includes views immediately surrounding the trailer, and in the rear proximity of the vehicle including the rear of the trailer. In one example, a view of the rear proximity of the vehicle is generated by a rear facing camera disposed at the rear of the vehicle, and can include both the immediate rear proximity and a traditional rearview (e.g., a view extending rearward to the horizon, as may be generated by a rearview mirror in vehicles without a trailer). In such examples, the third display 18c may include one or more frames displaying the Class VIII views. Alternatively, additional displays can be added near the first, second and third displays 18a, 18b, 18c and provide a display dedicated to providing a Class VIII view.

Certain visual characteristics of the trailer 14 that are visible in one or more CMS views can provide warning of an upcoming potential jackknife condition by indicating an approximate trailer angle. Some example visual characteristics may include (1) a percentage of a particular one of the images that depicts the trailer exceeding a first threshold, and (2) a distance between predefined reference position of the trailer and a predefined image location crossing a second threshold. The distance may be measured in pixels, or any other uniform unit relative to the image, for example.

These visual characteristics serves as trigger conditions for triggering a warning. The CMS 15 analyzes images recorded by the cameras 20A-B to determine whether the images are indicative of a trigger condition. By correlating the visual characteristics of the images with one or more trailer angles corresponding to jackknife warning thresholds, the CMS 15 can determine when a jackknife warning should be provided. If desired, the CMS 15 can also use a look-up table to determine an approximate trailer angle.

Different trailer angles may represent different likelihoods of a jackknife condition occurring, and may trigger warnings with different severity levels. Assume that a jackknife condition will occur at an angle of X°. If the trailer angle is X minus 20° then a first warning corresponding to a first severity may be provided, and once the angle is X minus 10° a second warning corresponding to a second severity may be provided, with the second severity being greater than the first severity, and so on. In some cases, the warning from the CMS 15 may include a suggested operation change (e.g., steering direction change) to correct or prevent the potential jackknife condition.

In one example, the CMS 15 utilizes different jackknife warning thresholds based on a speed of the vehicle 10. When the vehicle 10 is parking, for example, a higher trailer angle may be acceptable because the vehicle is moving at low speeds. However, when the vehicle is driving on a road, such as a highway, the CMS 15 may lower the threshold because the likelihood of a jackknife condition occurring is greater at higher speeds. Thus, in one example the CMS 15 uses a first jackknife warning threshold (e.g., images indicating a trailer angle of 80° or 90°), at a first range of speeds, and uses a second jackknife warning threshold (e.g., images indicating a trailer angle of 60° or 70°) that is lower than the first jackknife warning threshold at a second range of speeds that is higher than the first range of speeds.

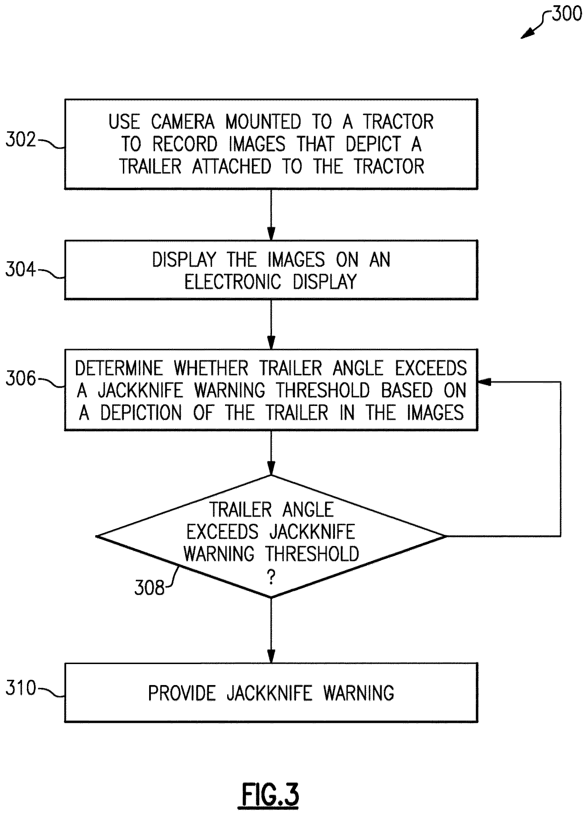

With continued reference to Figures 1, 2A and 2B, Figure 3 illustrates an example method 300 for preventing jackknifing between the tractor 12 and the trailer 14 by implementing the above described correlations. A camera (20A and/or 20B) that is mounted to the tractor 12 is used to record images that depict a trailer (e.g., trailer 14) attached to the tractor 12 (step 302). The images are displayed on an electronic display (e.g., electronic displays 18A and/or 18B) (step 304). A determination is made of whether a trailer angle of the trailer exceeds a jackknife warning threshold based on a depiction of the trailer 14 in the images (step 306). If the trailer angle exceeds the jackknife warning threshold (a "yes" to step 308), a jackknife warning is provided (step 310). Otherwise, if the trailer angle does not exceed the jackknife warning threshold (a "no" to step 308), the method 300 continues by processing additional images recorded by the camera.

Step 306 includes the CMS controller 13 analyzing images from the camera(s) 20A and/or 20B for an indication of whether the trailer angle exceeds the jackknife warning threshold. These indications may be "trigger conditions" in that they may trigger the jackknife warning of step 310. One example trigger condition corresponds to a percentage of a particular one of the images that depicts the trailer 14 exceeding a first threshold (e.g., 50% of the image). As the trailer angle increases, the trailer 14 will occupy more and more of the recorded images. This trigger condition correlates the percentage of the image (e.g., a percentage of pixels) that depict the trailer 14 in the overall image to a particular trailer angle at which a warning should be provided (e.g., 60° or 70°). The percentage of the image that corresponds to the trailer 14 can be determined using techniques such as edge detection and/or analyzing a color of the trailer compared to other parts of the image.

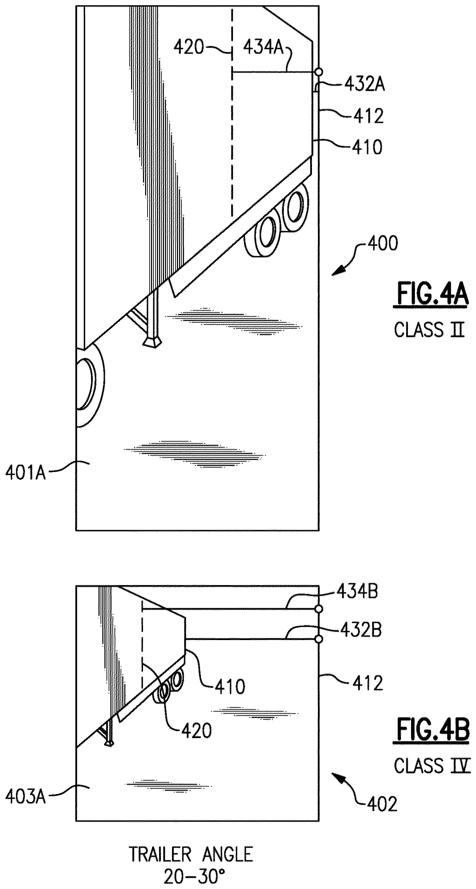

Another example trigger condition corresponds to a distance between a predefined reference position of the trailer (e.g., a vertical rear edge of the trailer 14 or a marker on the trailer 14) and a predefined image location (e.g., an edge of the image as depicted in Figures 4-7) crossing a threshold. The marker on the trailer may correspond to a point halfway along the length of the trailer, or some other point (e.g., 1/3 of length of the trailer from the end), for example. If desired, multiple reference positions could be identified along a length of the trailer 14 for comparison. Further, the reference position(s) may be identified in the image via rules based image analysis, trailer markings, trained neural network analysis, or any combination of same or similar techniques.

The distance may be measured between the predefined position in the trailer 14 and an edge of the image farthest from the trailer 14 when the trailer angle is zero (in which case "crossing" the threshold would be falling below the threshold), or between the predefined position of the trailer 14 and an edge of the image closest to the trailer when the trailer angle is zero (in which case "crossing" the threshold would be exceeding the threshold).

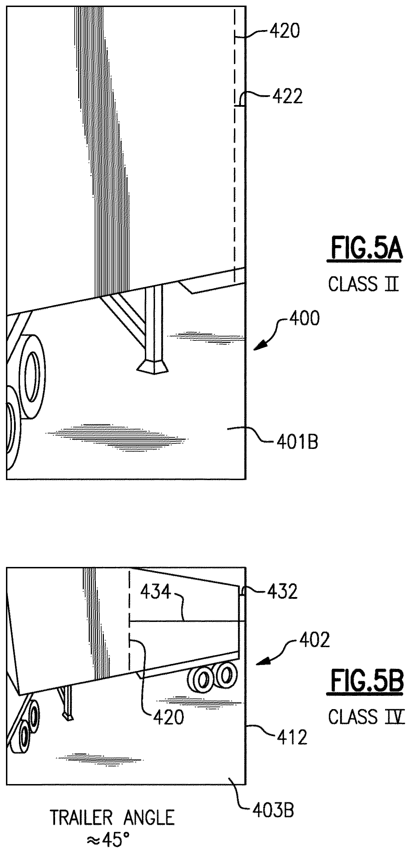

Figures 4A-B, 5A-B, 6A-B, and 7A-B show CMS images at different trailer angles. In particular, Figures 4A, 5A, 6A, and 7A show Class II views, and Figures 4B, 5B, 6B, and 7B show Class IV views that may be simultaneously presented along with their corresponding Class II views (e.g., views of Figures 4A-B provided simultaneously, views of Figures 5A-B provided simultaneously, etc.). In the example below, a trailer angle of 60° will be used as an example jackknife warning threshold, but it is understood that this is only an example and that other angles could be used.

Figure 4A shows a Class II image 401A at a trailer angle of approximate 20°-30°, and Figure 4B shows a Class IV image 403A of the same trailer angle. As is appreciated in the art, the Class II views are subsets of the corresponding Class IV views.

In some cases, one of the visual characteristics (e.g., the trailer end 410 which corresponds to a rear vertical edge of the trailer) may have passed out of the field of view of the given Class view (Class II in Figures 4A, 5A, 6A and 7A and Class IV in Figures 4B, 5B, 6B and 7B), then it may no longer be possible to use an image from that view for the trigger condition of determining whether a distance between a predefined reference position of the trailer 14 and a predefined image location crossing the threshold. In one such example, based on this happening (or based on the this being about to happen if the trailer end 410 is about to pass out of the field of view), the CMS 15 starts using another trigger condition (e.g., determining whether a percentage of the trailer in the image exceeds a predefined threshold).

Figures 4A and 4B illustrate a simultaneous Class II view 400 depicting a Class II image 401A (Figure 4A) and a Class IV view 402 depicting a Class IV image 403A (Figure 4B) with the trailer 14 at a trailer angle in the range of 20 to 30 degrees, relative to the tractor 12. The Class II view 400 is a subset of the Class IV view 402, focused on the rear edge end/rear vertical edge 410 of the trailer 14. As shown in the images 401A, 403A, the trailer has two predefined reference positions that can be used for providing jackknife warnings, which include the rear end/edge 410 of the trailer 14 and also a center reference location 420 corresponding to a location that is disposed one half of the way along the edge of the trailer 14 (and may be represented by a marker on the trailer 14, for example). A distance 432A is a distance between the edge 410 of the trailer 14 and a vertical boundary 412 of the image 401A, and a distance 434A is a distance between the reference location 420 and a vertical boundary 412 of the image 401A. In the illustrated example, the trailer end 410 is immediately adjacent the vertical boundary 412 of the view 400 and image 401, and is about to pass out of view.

The Class IV image 402 illustrated in 4B provides a wider view and the CMS 15 identifies a distance 432B between the trailer end 410 and the vertical boundary 412 corresponding to an edge of the Class II image 400 and a distance 434B between the center reference point 420 and the vertical boundary 412. The CMS 15 may determine a distance 434 between the center of the trailer reference position 420 and the vertical boundary 412. In this example, approximately 50% of the image 401A depicts the trailer 14, and approximately 25% of the image 403A depicts the trailer 14. Although the distances 432 and 434 are shown in Figures 4A-B and in other figures for explanatory purposes, it is understood that these distances may not be labeled in the image presented to the driver.

Figures 5A and 5B illustrate a simultaneous Class II view 400 depicting a Class IV image 401B (Figure 5A) and Class IV view 402 depicting a Class IV image 403B (Figure 5B) with the trailer 14 at a trailer angle of approximately 45 degrees, relative to the tractor 12. The trailer end 410 has passed out of view of the Class II view 400 and is approaching (immediately adjacent) the vertical boundary 412 in the Class IV view 402. Approximately half (50%) of the trailer 14 is in the Class II view 402. The central reference position 420 is about midpoint in the class IV view, and an entire length (100%) of the trailer 14 is visible in the Class IV view. In this example, approximately 60% of the image 401B depicts the trailer 14, and approximately 40% of the image 403B depicts the trailer 14.

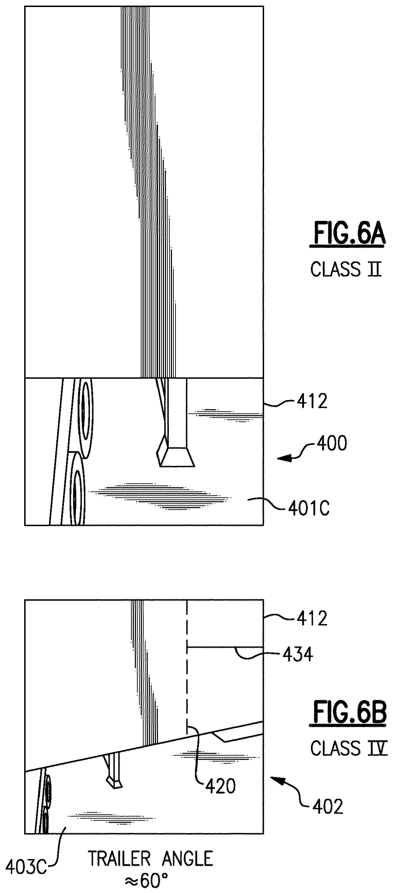

Figures 6A and 6B illustrate a simultaneous Class II view 400 depicting a Class II image 401C (Figure 6A) and Class IV view 402 depicting a Class IV image 403C (Figure 6B) at a trailer angle of approximately 60 degrees. The central reference point has passed out of view of the Class II view 400 and is about 75% distance to the vertical boundary of the Class IV view. In the class II view, approximately 40% of the trailer 14 is visible. In the Class IV view, approximately 80% of the trailer 14 is visible. In this example, approximately 70% of the image 401C depicts the trailer 14, and approximately 60% of the image 403C depicts the trailer 14

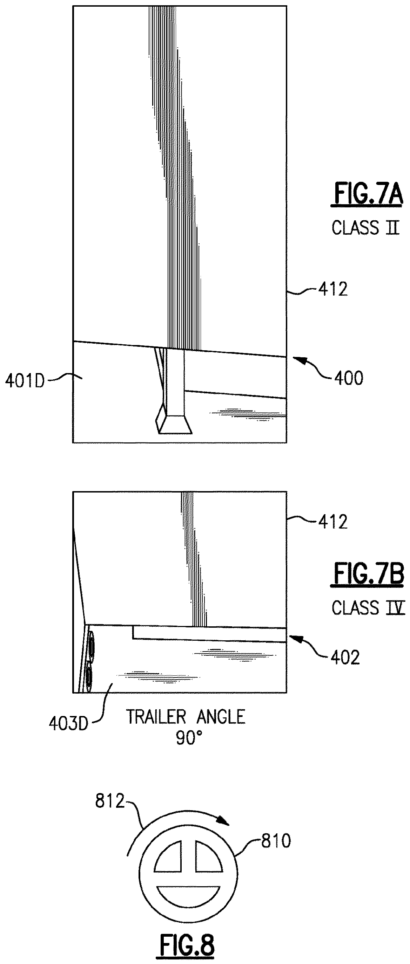

Figures 7A and 7B illustrate a simultaneous Class II view 400 depicting a Class II image 401D (Figures 7A) and Class IV view depicting a Class IV image 403D (Figure 7B) when the trailer 14 is at a 90 degree angle. At this angle the trailer angle is at a maximum, and cannot be further angled without damaging either the tractor 12 , the trailer 14, or both. The central reference point has passed out of view in both class II and Class IV views. In the Class II view, approximately 20% of the trailer 14 is in view, and in the Class IV view, approximately 405 of the trailer 14 is in view. In this example, approximately 80% of the image 401D depicts the trailer 14, and approximately 70% of the image 403D depicts the trailer 14

The "jackknife warning" that is provided in step 310 may include providing an indicator/indication on the CMS display 18. In one example, the indicator takes the form of an icon 810, illustrated in Figure 8, indicating a proposed corrective steering action, such as a turning direction 812, optionally with a color indicating the urgency of the correction. By way of example the icon 810 can be green for a least urgent state (e.g., when jackknifing has a low likelihood and/or imminence) and transition through yellow, orange and to red for a most urgent state (e.g., jackknifing has a high likelihood and/or imminence). In yet further examples, the icon can include motion (e.g., a rotating steering wheel icon) with the speed of the icon's motion providing an indication as to the potential urgency of the correction. The severity level is be provided relative to the current jackknife warning threshold. Thus, what is a "green" warning at a first jackknife warning threshold for a first vehicle speed rage may be a red warning for another jackknife warning threshold corresponding to a different vehicle speed rage. In addition, or as an alternative to a visual warning, an audible warning may be provided to a driver of the vehicle 10.

As described above, the method 300 does not require determining a trailer angle during performance of the method, because the trigger conditions have already been correlated to the jackknife warning threshold(s). Optionally though, a lookup table could be created and referenced during performance of the method 300 that correlates the image characteristics to specific trailer angles (e.g., correlate various percentages of the image 401 and/or 403 that depicts the trailer with specific trailer angles and/or correlate specific distances between the trailer reference position and predefined image location with specific trailer angles).

As discussed an example trigger condition for providing a jackknife warning may include percentage of a particular one of the images that depicts the trailer exceeding a first threshold. In the examples above, different percentages were discussed in relation to how much of the images 401 and/or 403 were occupied by the trailer 14. Because there is a correlation between trailer angle and this percentage, the percentage can be used as a criterion for determining whether a jackknife warning should be provided.

As also discussed above, another example trigger condition for providing a jackknife warning may include a distance between predefined reference position of the trailer and a predefined image location crossing a second threshold. The predefined reference position of the trailer could include the end 412 of the trailer or the reference position 420, for example. The predefined image location could include edge 412 of the images 401 and/or 403 (right edge in Figures 4-7) or another edge (e.g., left edge in Figures 4-7). Because there is a correlation between these distances and the trailer angle, the distance(s) can be used as a criterion for determining whether a jackknife warning should be provided.

Optionally, by correlating these visual indicators in the Class II view and the Class IV view with empirically determined trailer angles during testing, a look up table can be constructed for a given tractor 12 / trailer 14 configuration that maps the values discussed above (percentage of image occupied by trailer 14 and/or distance between trailer reference position and predefined image location) with specific trailer angles.

The above described examples are specific to one example configuration, and alternate configurations may have different numbers, but will have similar correlations where the combined positioning of the reference points and the visible trailer percentage in the images correlates to the trailer angle. Further, it is appreciated that differencing conditions (e.g., speed, icy, snowy, rainy, direction of travel, etc.) may impact the particular trailer angle correlations. In such examples, the process may include an adjustment of the jackknife warning thresholds based on driving conditions, and may include a separate look up table for each driving condition.

While the system described above is able to use the reference points to determine the potential jackknifing condition without the need for a trailer angle sensor, and without needing to determine a specific trailer angle, it is appreciated that some alternate systems can be constructed including a trailer angle sensor intended to provide additional operational details, and to provide a check against false determinations (e.g., if the CMS view includes an obstruction resulting in a false read of 60 degrees, but the trailer angle sensor indicates that the trailer is only at 30 degrees). In such a case, the CMS can determine the faulty read and disable the jackknifing awareness software.

Although an example embodiment has been disclosed, a worker of ordinary skill in this art would recognize that certain modifications would come within the scope of the claims. For that reason, the following claims should be studied to determine their true scope and content.

## Claims

1. A camera monitoring system (CMS) for a vehicle comprising:
a camera mounted to a tractor and configured to record images that depict a trailer attached to the tractor;
an electronic display configured to display the images; and
a CMS controller operatively connected to the camera and electronic display and configured to:
determine whether a trailer angle of the trailer exceeds a jackknife warning threshold based on a depiction of the trailer in the images; and
based on a particular one of the images indicating a trailer angle above the jackknife warning threshold, provide a jackknife warning.

2. The CMS of claim 1, wherein the CMS controller is configured to determine that a trailer angle of the trailer exceeds the jackknife warning threshold based on a percentage of the particular one of the images that depicts the trailer exceeding a predefined threshold.

3. The CMS of claim 1 or 2, wherein the CMS controller is configured to determine that a trailer angle of the trailer exceeds the jackknife warning threshold based on a distance between a predefined reference position of the trailer and a predefined image location in a particular one of the images crossing a threshold.

4. The CMS of claim 3, wherein the predefined reference position of the trailer is a rear vertical edge of the trailer.

5. The CMS of claim 3, wherein the predefined reference position is an intermediate location on a side of the trailer between ends of the trailer.

6. The CMS of any preceding claim, wherein the warning includes at least one of:
a proposed corrective steering direction;
an indication of a severity of a risk of a jackknife condition occurring; and
an audible warning.

7. A method for preventing jackknifing between a vehicle and a trailer, comprising:
using a camera mounted to a tractor to record images that depict a trailer attached to the tractor;
displaying the images on an electronic display;
determining whether a trailer angle of the trailer exceeds a jackknife warning threshold based on a depiction of the trailer in the images; and
based on a particular one of the images indicating a trailer angle above the jackknife warning threshold, provide a jackknife warning.

8. The method of claim 7, wherein said determining comprises determining that the trailer angle exceeds the jackknife warning threshold based on a percentage of the particular one of the images that depicts the trailer exceeding a predefined threshold.

9. The method of claim 7 or 8, wherein said determining comprises determining that the trailer angle exceeds the jackknife warning threshold based on a distance between a predefined reference position of the trailer in the particular one of the images and a predefined image location crossing a predefined threshold.

10. The method of claim 9, wherein the predefined reference position of the trailer is a rear vertical edge of the trailer.

11. The method of claim 9 or 10, wherein the predefined reference position is a marker on the trailer.

12. The method of any one of claims 7 to 11, wherein the warning is provided on the electronic display.

13. The method of any one of claims 7 to 12, wherein said providing the jackknife warning comprises at least one of:
indicating a proposed corrective steering direction to a driver of the vehicle;
providing an indication of a severity of a risk of the jackknife condition occurring; and
providing an audible warning.

14. The CMS of any one of claims 1 to 6, or the method of any one of claims 7 to 13, wherein the images depict at least one of a Class II view and a Class IV view.

15. A camera monitoring system (CMS) for a vehicle comprising:
a camera configured to record images that depict a trailer attached to the vehicle;
an electronic display configured to display the images; and
a CMS controller operatively connected to the camera and electronic display and configured to, based on occurrence of at least one trigger condition:
determine that a trailer angle of the trailer exceeds a jackknife warning threshold; and
provide a jackknife warning;
wherein the at least one trigger condition includes at least one of:
a percentage of a particular one of the images that depicts the trailer exceeding a first threshold; and
a distance between predefined reference position of the trailer and a predefined image location in the particular one of the images crossing a second threshold.
